# EUROPEAN PATENT SPECIFICATION

(11) **EP 1 492 007 B1**
(45) Date of publication and mention of the grant of the patent: **03.10.2012**
(21) Application number: 04076739.4
(22) Date of filing: 10.06.2004
(51) Int. Cl.: G06F 3/033, G06F 11/00

(54) **System and method of controlling a computer supporting multiple operation modes**
System und Verfahren zur Steuerung eines Rechners mit verschienen Betriebsmodi
Système et méthode pour contrôler un ordinateur autorisant plusieurs modes d'opération

(30) Priority: 25.06.2003 CN 03147853; 26.06.2003 CN 03148781
(43) Date of publication of application: 29.12.2004
(73) Proprietor: ACER INCORPORATED, Taipei Hsien 221 (TW)
(72) Inventor: Yang, Li-Yen c/o Acer Incorporated, Hsi-Chih City Taipei Hsien (TW)
(74) Representative: Mertens, Hans Victor

(56) References cited:
- DE-A1- 19 921 247
- US-A- 4 121 284
- US-A- 6 032 207
- US-A1- 2002 089 819

## Description

The present invention relates to a system and method of controlling a computer supporting multiple operation modes, and more particularly to a system and method of operating a computer capable of operating in multiple operation modes and controlling the operation of such computer by a mode controller and a watchdog monitor module.

In addition to conventional computer functions, most current computers have integrated a great number of multimedia functions, such as CD/MP3 player, VCD/DVD player, TV, and image processing utility.

Current computers can satisfy the demands of users for the purpose of entertainment. The operating system of a computer can execute numerous multimedia software, such as music player, video player, TV player, radio receiver application, image capturer and explorer, and video/audio recording programs, and perform associated multimedia functions using related peripheral appliances and corresponding drivers.

In general, conventional configurations of a computer provide a fixed number of specific control means corresponding to available operation modes. The computer can execute related software and operates in the designated operation mode by activating corresponding control means. Conventional methods are simple, however, the number of the control means available for use in a computer is limited and must be preset in advance, such that extension of the maneuverability of the computer is limited. To extend the maneuverability of the computer and enable the user to operate the computer in various operation modes in order to fulfill a specific demand for multimedia interaction, the manufacturer of the computer must produce related hardware to support the computer for operating in multiple operation modes, thereby increasing the manufacturing cost.

US 2002/0089819 discloses a portable information processing apparatus having an operation element which can be rotated and pushed in to execute a selected application.

It is an object of the present invention to provide a system and method of controlling a computer supporting multiple operation modes by a mode controller and a watchdog monitor module.

To achieve the above object, a preferred embodiment of the present invention provides a system and method for controlling a computer supporting multiple operation modes according to claims 1 and 8 respectively. The system according to the present invention includes a mode controller for generating a combination of electric potentials on two connection terminals, and an additional microprocessor. The additional microprocessor includes a storage module including a mode list recording a plurality of operation modes, and a pointer for designating one of the operation modes in the mode list as a first operation mode for the computer. The additional microprocessor also includes a detection module to detect the combination of the electric potentials at a first sampling point, and determines a shift direction of the mode controller according thereto. The additional microprocessor further includes a control module to select a second operation mode adjacent to the first operation mode in the mode list according to the shift direction, check the disparity between the first operation mode and the second operation mode, provide a control signal to the computer according to the check result, direct the computer to reboot or execute an application specific to the second operation mode, and subsequently enable the computer to operate in the second operation mode.

The method of controlling the computer supporting multiple operation modes according to the present invention uses an additional microprocessor to detect a combination of the electric potentials triggered by a mode controller at a first sampling point, and then determines a shift direction of the mode controller according thereto. Then, a second operation mode adjacent to the first operation mode in the mode list is selected according to the shift direction. Then, the additional microprocessor checks the disparity between the first operation mode and the second operation mode, provides a control signal to the computer according to the check result, and directs the computer to reboot or execute an application specific to the second operation mode, and subsequently enables the computer to operate in the second operation mode.

Further, the detection module stops detecting the combination of the electric potentials within a first predetermined period after the first sampling point, and resumes to detect the combination of the electric potentials at a second sampling point after the first predetermined period is expired and before a second predetermined period is reached. If the combination of the electric potentials detected at the first sampling point and the combination of the electric potentials detected at the second sampling point are different with each other, the detection module ignores the shift direction corresponding to the combination of electric potentials detected at the second sampling point.

A further aspect of the present invention is directed to an application management system that is used to monitor the execution of an application when the computer is operating in either a normal operation mode or a specific operation mode, and protect the computer from crash due to the abnormality encountered during the execution of the application. The application management system is implemented by a watchdog monitor module being embedded in the additional microprocessor. If the execution of an application is abnormal, the watchdog monitor module enables the computer to reboot, and instructs a first microprocessor (the central processing unit of the computer) of the computer to re-execute the application.

Further, the watchdog monitor module may alternatively adopt two methodologies to monitor the execution of the application and protect the computer from system crash. In a first possible configuration of the watchdog monitor module, the application is configured to send a LIVE signal to the watchdog monitor module when a first predetermined time interval is reached, and if the LIVE signal is not received from the application within a second predetermined time interval, the watchdog monitor module determines that the execution status of the application becomes abnormal and thus enables the computer to reboot or re-execute the application.

In a second possible configuration of the watchdog monitor module, the watchdog monitor module is configured to send a CONFIRMATION signal to the application when a first predetermined time interval is reached, and the application is configured to return a SURVIVING signal to the watchdog monitor module in response to the CONFIRMATION signal, wherein if the SURVIVING signal is not received from the application within a second predetermined time interval, the watchdog monitor module determines that the execution status of the application becomes abnormal and thus enables the computer to reboot and re-execute the application.

The aforementioned objects, features and advantages of the invention will become apparent by referring to the following detailed description of the preferred embodiment with reference to the accompanying drawings, wherein:
Fig. 1 is a schematic diagram illustrating the architecture of the system for controlling the computer supporting multiple operation modes according to the present invention;
Fig. 2 is a schematic diagram illustrating the circuit of the mode controller;
Fig. 3A is a schematic diagram illustrating the combination of the electric potentials of the mode controller when the mode controller is being applied with a clockwise rotational force;
Fig. 3B is a schematic diagram illustrating the combination of the electric potential of the mode controller when the mode controller is being applied with a counterclockwise rotational force;
Fig. 4 is a schematic diagram illustrating the detection of the combination of the electric potentials triggered by the mode controller;
Fig. 5 is a schematic diagram illustrating the electric potentials caused by the rotational counterforce being applied to the mode controller;
Fig. 6 is a flowchart showing the processing of the detection module according to the present invention;
Fig. 7 is a flowchart showing the method of controlling the operation of a computer supporting multiple operation modes by a mode controller according to the present invention;
Fig.8 is a block diagram showing the application management system being used to control the application executed by the computer supporting multiple operation modes; and
Fig. 9 is a flowchart showing the processing of application management system.

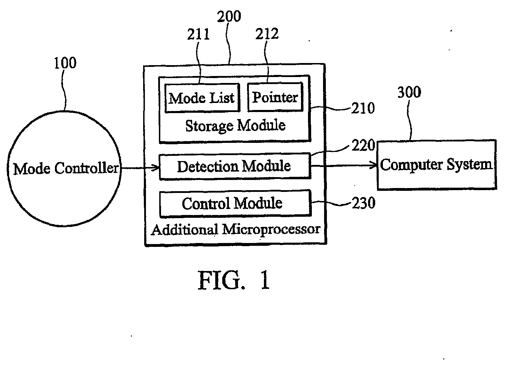

Fig. 1 illustrates a generalized architecture of the system of controlling a computer supporting multiple operation modes according to the present invention. As shown in Fig. 1, the system of controlling a computer supporting multiple operation modes is applied to a computer 300. The system includes a mode controller 100 and an additional microprocessor 200.

The mode controller 100 selects the operation mode of the computer 300. In the preferred embodiment, the mode controller 100 can be a knob controller constructed on the computer host. With the rotational force being applied to the mode controller 100, the computer 300 may operate in a normal operation mode or one of the sub-modes subjected to a multimedia mode class, such as a music playing mode, a video playing mode, a TV broadcasting mode, a radio receiving mode, and an image exploring mode. In a preferred embodiment of the present invention, the computer is configured to execute a sub-mode application specific to the selected sub-mode, for example, the computer 300 may run a music player application when the operation mode of the computer 300 is selected as a music playing mode, a video player application when the operation mode of the computer 300 is selected as a video playing mode, a TV viewer application when the operation mode of the computer 300 is selected as a TV broadcasting mode, an Internet radio application when the operation mode of the computer 300 is selected as a radio receiving mode, and a photo explorer application when the operation mode of the computer 300 is selected as an image exploring mode. These sub-mode applications being respectively specific to an individual sub-mode are executed by the computer 300 under a purified operating environment, that is, the computer 300 is running by a simplified version of an operating system with only the corresponding sub-mode application and basic system configuration settings loaded into system, while hardware device drivers, other application programs, plug-and-play utilities, are unloaded or disabled when the computer 300 is operating in a selected sub-mode.

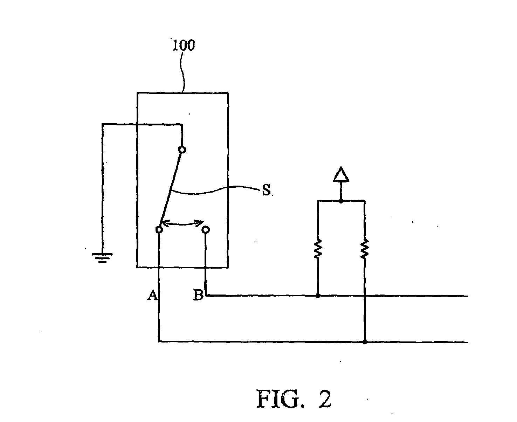

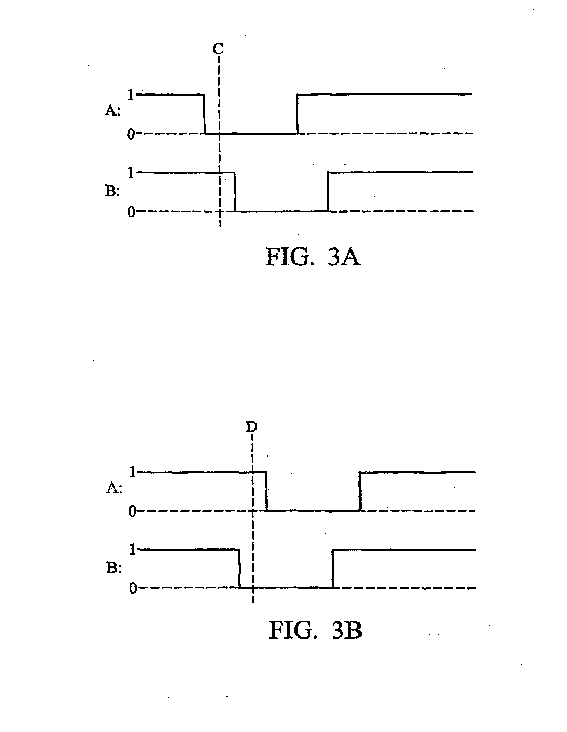

The operation principle of the mode controller 100 is illustrated in Fig. 2. When the switch S of the controller 100 rotates, a first connection terminal A and a second connection terminal B can be triggered to raise its corresponding electric potential. For example, if the mode controller 100 rotates clockwise, the first connection terminal A and the second connection terminal B are triggered successively by the switch S, and the combination of the electric potentials on the two connection terminals is illustrated in Fig. 3A, in which C represents a sampling point for detection. In addition, if the mode controller 100 rotates counterclockwise, the first connection terminal A and the second connection terminal B are triggered successively by the switch S, and the combination of the electric potentials on the two connection terminals is illustrated in Fig. 3B, in which D represents a sampling point for detection.

The additional microprocessor basically includes a storage module 210, a detection module 220 and a control module 230. The storage module 210 includes a mode list 211 and a pointer (flag) 212, in which the mode list 211 records the available operation modes provided by the computer 300, and the pointer 212 selects one of the available operation modes and designates the selected operation mode as the current operation mode of the computer 300. Note that in order to add a new operation mode, the manufacturer may add the desired operation modes to the mode list 211 without the requirement of additional hardware support.

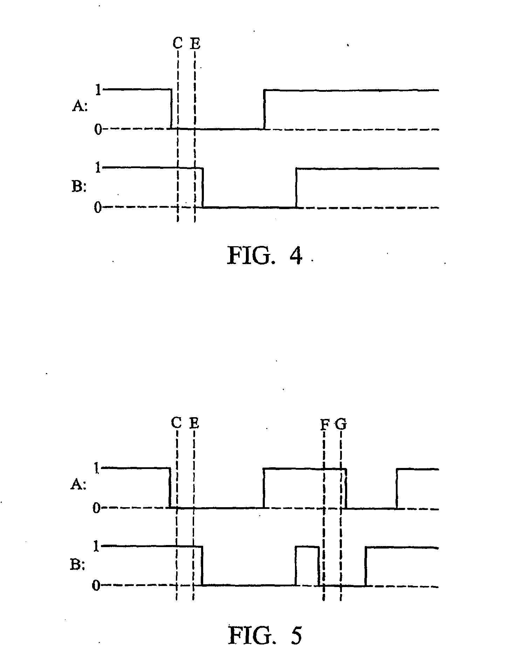

The detection module 220 detects the state of the mode controller 100, that is, the detection module 220 detects the combination of the electric potentials on the first connection terminal A and the second connection terminal B, and determines a shift direction of the mode controller 100 according thereto. It should be noted that, in general, two successive sampling points are used for accurate detection, such as sampling points C and E in Fig. 4, and the detection is valid if the detection results respectively evaluated at the two sampling points match with each other.

In addition, the rotation counterforce applied to the mode controller 100 may likely cause electric potentials on the two connection terminals A and B of the mode controller 1010, as illustrated in Fig. 5. In this case, the determination of the shift direction of the mode controller 100 may be wrong if the detection is performed at sampling points F and G. Therefore, the present invention provides two modes to solve the problem. In the first mode, the detection module 220 may ignore all triggers of the connection terminals, that is, the detection module 220 stops detecting the combination of the electric potentials within a first predetermined period, such as 200ms, after the first sample point. In the second mode, the detection module 220 may ignore the detection result performed at a succeeding sampling point if the shift direction corresponding to the first sampling point is not the same as that of a succeeding sampling point within a second predetermined period after the first sampling point. It should be noted that the two modes could be adopted synthetically or alternatively.

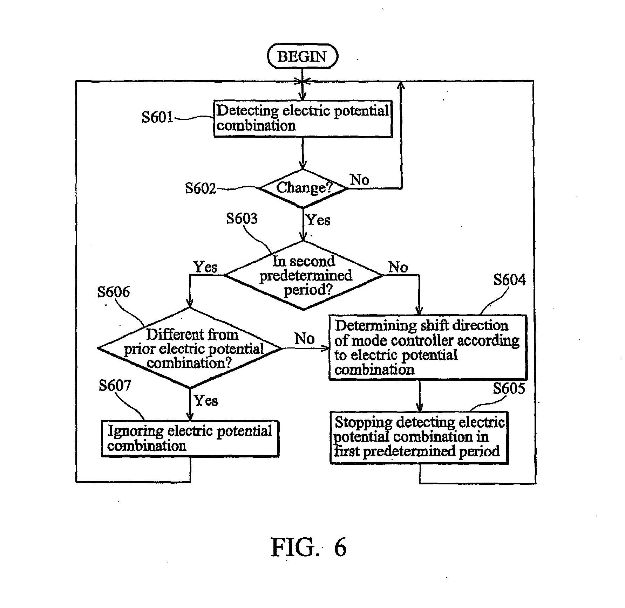

Fig. 6 shows the processing of the detection module 220 according to the present invention. First, in step S601, the detection module 220 detects the combination of the electric potentials on the first connection terminal A and the second connection terminal B. If the combination of the electric potentials on the connection terminals A and B does not change and the electric potentials of the two connection terminals both stay low (No in step S602), the flow returns to step S601. If the combination of the electric potentials of the connection terminals A and B changes (Yes in step S602), in step S603, it determines whether the detection has occurred within the second predetermined period after a first detection. If not (No in step S603), in step S604, the detection module 220 determines a shift direction of the mode controller 100 according thereto, and in step S605, stops detecting the combination of the electric potentials within the first predetermined period. After the first predetermined period expires, the flow returns to step S601.

If the detection is occurred within the second predetermined period after a first detection (Yes in step S603), in step S606, the detection module 220 checks whether the combination of the electric potential is different from the prior one. If not (No in step S606), in step S604, the detection module 220 determines a shift direction of the mode controller according thereto, and performs the process of step S605. If so (Yes in step S606), in step S607, the detection module 220 ignores the combination of the electric potentials of this detection, and the flow returns to step S601.

The control module 230 selects a second operation mode adjacent to the first operation mode designated by the pointer 212 in the mode list 211 according to the control direction determined by the detection module 220. The operation mode following the first operation mode in the mode list 211 is selected if the shift direction of the mode controller 100 is clockwise, and the operation mode preceding the first operation mode in the mode list 211 is selected if the shift direction of the mode controller 100 is counterclockwise. The control module 230 also checks the disparity between the first operation mode and the second operation mode to provide a control signal to the computer 300 according to the check result, thereby directing the computer 300 to reboot or execute an application specific to the second operation mode, and subsequently enables the computer to operate in the second operation mode.

If the first operation mode is a normal operation mode and the second operation mode is one of the sub-modes of the multimedia mode class, the control module 230 generates a control signal to a power circuit (not shown in figures) of the computer 300, thereby directing the computer 300 to reboot and operating in the second operation mode, and executing the application specific to the second operation mode (selected sub-mode of the multimedia mode class). If the first operation mode is one of the sub-modes of the multimedia mode class and the second operation mode is the normal operation mode, the control module 230 generates a control signal to the power circuit of the computer 300, thereby directing the computer 300 to reboot and operate in the normal operation mode. If the first operation mode and the second operation mode are different sub-modes of the multimedia mode class respectively, the control module 230 generates a control signal to the computer 300, thereby directing the computer 300 to operate in the second operation mode, and execute the application specific to the second operation mode. It should be noted that the number of applications may be coincident to the number of the sub-modes of the multimedia mode class, and each sub-mode executes a specific application under a purified operating environment.

In addition, a display screen (not shown) can be provided on the computer 300 to show the current operation mode of the computer 300. If the mode controller 100 rotates, the control module 230 may send a signal to display the related information of the second operation mode, such as the name of the operation mode. Further, the operation modes can be selected in order using the mode controller 100. It should be noted that the content shown on the display screen is allowed to change in a preset period, such as 2 seconds, and the additional microprocessor will direct the computer to change operation mode until the mode controller stops.

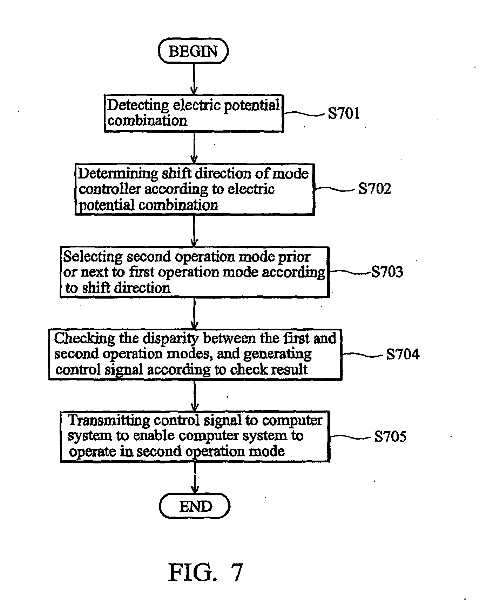

Fig. 7 shows the method for operation mode control according to the present invention.

First, in step S701, the detection module 220 of the additional microprocessor 200 detects the combination of the electric potentials, and in step S702, determines a shift direction of the mode controller 100 according thereto. Then, in step S703, the control module 230 of the additional microprocessor 200 selects a second operation mode adjacent to the first operation mode in the mode list 211 according to the shift direction. Thereafter, in step S704, the control module 230 checks the disparity between the first operation mode and the second operation mode and generates a control signal according to the check result. Afterward, in step S705, the control module 230 transmits the control signal to the computer 300 to direct the computer 300 to reboot or execute a sub-mode application, and subsequently enables the computer 300 to operate in the second operation mode.

As a result, the system and method for controlling the operation of a computer supporting multiple operation modes according to a preferred embodiment of the present invention can easily control the computer supporting multiple operation modes via a mode controller and an additional microprocessor. In addition, to extend available operation modes of the computer, the manufacturer can incorporate the desired operation modes into the mode list without requirement of additional hardware support, thereby saving related costs.

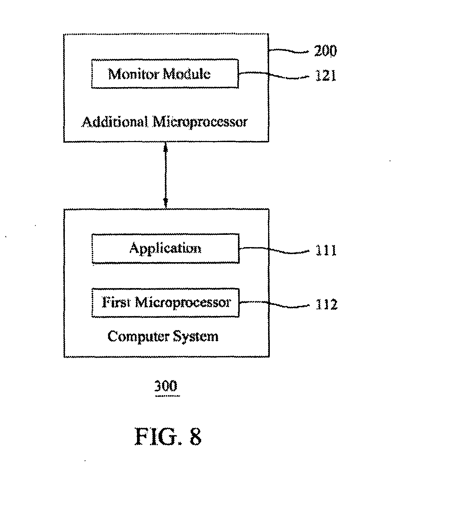

In addition to the operation mode control mechanism for a computer supporting multiple operation modes as disclosed herein, the computer 300 further provides an application management system to monitor an execution of an application when the computer 300 is operating in a normal operation mode and monitor an execution of the sub-mode applications when the computer 300 is operating in a sub-mode, and thereby prevent the computer 300 from crash due to the abnormality undergone during the execution phase of the applications. As shown in Fig. 8, in a preferred embodiment, the application management system is implemented by a watchdog monitor module 121 being embedded in the additional microprocessor 200. The watchdog monitor module 121 is a software routine that performs in the background of the operating environment and places the applications running on the computer 100 under surveillance. If the execution status of the application 111 is abnormal, the watchdog monitor module 121 sends a control signal to a power supply circuit (not shown) of the computer 300 via the additional processor 200 to reboot the computer 300 and execute the application 111 using the first processor 112 (which is preferably embodied in the central processing unit of the computer 300) again.

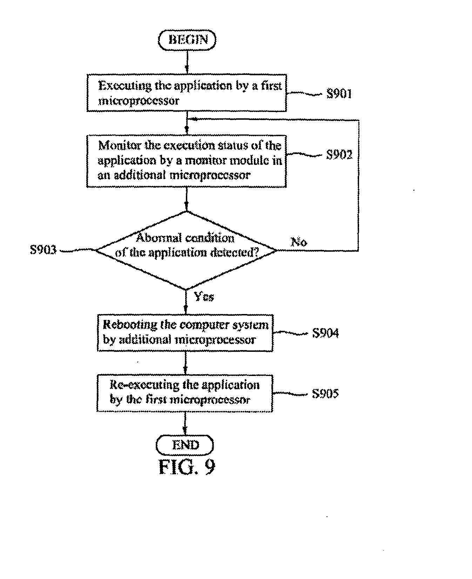

Fig. 9 shows the processing of the application management system (watchdog monitor module 121) according to a preferred embodiment of the present invention.

First, in step S901, the first processor 112 of the computer 110 executes the application 111. Then, in step S902, the watchdog monitor module 121 monitors the execution of the application 111 in the computer 300. At this point, if the execution is normal (No in step S903), the process returns to step S902, and the watchdog monitor module 121 continues to monitor the execution of the application 111.

Similarly, the watchdog monitor module 121 may alternatively adopt two methodologies to monitor the execution of the application 111. If the first methodology is adopted, the application 111 may be configured to send a LIVE signal to the watchdog monitor module 121 when a first predetermined time interval is reached. If the watchdog monitor module 121 does not receive the LIVE signal from the application 111 within a second predetermined time interval, the watchdog monitor module 121 determines that the execution of the application 111 becomes abnormal. If the second methodology is adopted, the watchdog monitor module 121 may send a CONFIRMATION signal to the application 111 when a first predetermined time interval is reached, and the application 111 may be configured to return a SURVIVING signal to the watchdog monitor module 121 in response to the CONFIRMATION signal. If the watchdog monitor module 121 does not receive the SURVIVING signal from the application 111 in the second predetermined time interval, the watchdog monitor module 121 determines that the execution of the application becomes abnormal.

If the execution of the application 111 becomes abnormal (Yes in step S903), in step S904, the watchdog monitor module 121 sends a control signal to the power supply circuit of the computer 300 to reboot the computer 300. Thereafter, in step S905, the first processor 112 of the computer 300 automatically re-executes the application 111 again.

As a result, by using the application management system according to the present invention, the execution of the application program on a computer supporting multiple operation modes can be monitored by using an additional microprocessor, which serves in cooperation with a mode controller as an operation mode control mechanism.

Although the present invention has been described in its preferred embodiments, it is not intended to limit the invention to the precise embodiments disclosed herein. Those who are skilled in this technology can still make various alterations and modifications without departing from the scope of this invention. Therefore, the scope of the present invention shall be defined and protected by the following claims and their equivalents.

## Claims

1. System of controlling a computer (300) supporting multiple operation modes, comprising:
a mode controller (100) for generating a combination of electric potentials on a first connection terminal (A) and a second connection terminal (B); and
an additional microprocessor (200), comprising:
a storage module (210);
a detection module (220); and
a control module (230),
**characterised by**:
the computer (300) being configured to operate in a normal operating mode or one of sub-modes subjected to a multimedia mode class, and when being operated in one of said sub-modes, the computes being configured to execute a specific sub-mode application under a simplified vession of the operating system;
the storage module comprising a mode list (211) recording a plurality of operation modes, and a pointer (212) designating one of operation modes in the mode list as a first operation mode;
the detection module being configured for:
detecting the combination of the electric potentials at a first sampling point;
detecting the combination of the electric potentials at a second sampling point;
determining shift directions of the mode controller according to the combinations of the electric potentials;
ignoring the combination of the electric potentials detected at the second sampling point if a shift direction corresponding to the first sampling point is not the same as a shift direction corresponding to the second sampling point and the second sampling point is within a predefined time period after the first sampling point,
the control module being configured for
selecting a second operation mode adjacent to the first operation mode in the mode list according to the shift direction, corresponding to the second sampling point,
checking a disparity between the first operation mode and the second operation mode, and
(a) when the first operation mode is one of the sub-modes subjected to a multimedia mode class and the second operation mode is the normal operation mode, generating a control signal to a power circuit of the computer (300) to direct the computer to reboot, enabling the computer to operate in the second operation mode, and executing an application specific to the second operation mode; or,
(b) when the first operation mode is one of the sub-modes subjected to a multimedia mode class and the second operation mode is the normal operation mode, generating a control signal to the power circuit of the computer to direct the computer to reboot and operate in the normal operation mode; or,
(c) when the first operation mode and second operation mode are different sub-modes subjected to a multimedia mode class respectively, generating a control signal to the computer to direct the computer to operate in the second operation mode, and executing the Sub-mode application specific to the second operation mode.

2. System according to claim 1, wherein the control module (230) further updates the pointer (212) to select the second operation mode according to the shift direction.

3. System according to claim 1, wherein the detection module (220) further stops detecting the combination of the electric potentials within another predetermined period after the first sampling point.

4. System according to claim 1, further comprising a display screen, to which the control module (230) further sends a signal to display information of the second operation mode.

5. System according to claim 1, wherein the additional microprocessor (200) further comprises a watchdog monitor module (121) to monitor an execution of an application being executed by the computer.

6. System according to claim 5, wherein the application is configured to send a LIVE signal to the watchdog monitor module (121) when a first predetermined time interval is reached, and the watchdog monitor module determines that the execution of the application becomes abnormal if the LIVE signal is not received from the application within a second predetermined time interval.

7. System according to claim 5, wherein the watchdog monitor module (121) is configured to send a CONFIRMATION signal to the application when a first predetermined time interval is reached, and the application is configured to return a SURVIVING signal to the monitor module in response to the CONFIRMATION signal, wherein the watchdog monitor module determines that the execution of the application becomes abnormal if the SURVIVING signal is not received from the application within a second predetermined time interval.

8. Method of controlling a computer (300) supporting multiple operation modes, comprising the steps of:
providing a mode controller (100) to generate a combination of electric potentials on a first connection terminal (A) and a second connection terminal (B); and
providing an additional microprocessor (200) comprising a storage module (210),
**characterised by**:
the storage module including a mode list (211) recording a plurality of operation modes and a pointer (212) selecting one of the operation modes in the mode list as a first operation mode;
the computer (300) being configured to operate in a normal operating mode or one of the sub-modes subjected to a multimedia mode class, and when being operated in one of said sub-modes, the computer being configured to execute a specific sub-mode application under a simplified version of the operating system;
detecting the combination of the electric potentials at a first sampling point;
detecting the combination of the electric potentials at a second sampling point;
determining shift directions of the mode controller according to the combinations of the electric potentials;
ignoring the combination of the electric potentials detected at the second sampling point if a shift direction corresponding to the first sampling point is not the same as a shift direction corresponding to the second sampling point and the second sampling point is within a predefined time period after the first sampling point,
selecting a second operation mode adjacent to the first operation mode in the mode list according to the shift direction corresponding to the second sampling point;
checking a disparity between the first operation mode and the second operation mode; and
(a) when the first operation mode is one of the sub-modes subjected to a multimedia mode class and the second operation mode is the normal operation mode, generating a control signal to a power circuit of the computer (300) to direct the computer to reboot, enabling the computer to operate in the second operation mode, and executing an application specific to the second operation mode; or,
(b) when the first operation mode is one of the sub-modes subjected to a multimedia mode class and the second operation mode is the normal operation mode, generating a control signal to the power circuit of the computer to direct the computer to reboot and operate in the normal operation mode; or,
(c) when the first operation mode and second operation mode are different sub-modes subjected to a multimedia mode class respectively , generating a control signal to the computer to direct the computer to operate in the second operation mode, and executing the sub-mode application specific to the second operation mode

9. Method according to claim 8, further comprising updating the pointer (212) to select the second operation mode according to the shift direction.

10. Method according to claim 8, further comprising stopping detecting the combination of the electric potentials within a first predetermined period after the first sampling point.

11. Method according to claim 8, further comprising sending a signal to a display screen to display information of the second operation mode.

## Patentansprüche

1. System zum Steuern eines Computers (300), der mehrere Betriebsmodi unterstützt, umfassend:
eine Modus-Steuerung (100) zum Erzeugen einer Kombination elektrischer Potenziale an einem ersten Anschluss (A) und einem zweiten Anschluss (B); und
einen zusätzlichen Mikroprozessor (200), der umfasst:
ein Speichermodul (210);
ein Detektionsmodul (220); und
ein Steuermodul (230),
**dadurch gekennzeichnet,**
**dass** der Computer (300) eingerichtet ist, um in einem normalen Betriebsmodus oder einem von Untermodi, die einer Multimedia-Modus-Klasse untergeordnet sind, zu arbeiten, und wobei der Computer, wenn er in einem der Untermodi betrieben wird, eingerichtet ist, um eine spezifische Untermodus-Applikation unter einer vereinfachten Version des Betriebssystems auszuführen;
**dass** das Speichermodul eine Modusliste (211), die eine Mehrzahl von Betriebsmodi speichert, und einen Pointer (212), der einen der Betriebsmodi in der Modusliste als einen ersten Betriebsmodus bezeichnet, umfasst;
**dass** das Detektionsmodul eingerichtet ist, um
die Kombination der elektrischen Potenziale an einem ersten Abtastpunkt zu detektieren;
die Kombination der elektrischen Potenziale an einem zweiten Abtastpunkt zu detektieren;
Verschiebungsrichtungen der Modus-Steuerung gemäß den Kombinationen der elektrischen Potenziale zu bestimmen;
die Kombination der elektrischen Potenziale, die an dem zweiten Abtastpunkt detektiert werden, zu ignorieren, falls eine Verschiebungsrichtung, die dem ersten Abtastpunkt entspricht, nicht dieselbe ist wie eine Verschiebungsrichtung, die dem zweiten Abtastpunkt entspricht, und der zweite Abtastpunkt innerhalb einer vorherbestimmten Zeitspanne nach dem ersten Abtastpunkt liegt,
**dass** das Steuermodul eingerichtet ist,
um einen zweiten Betriebsmodus, der zu dem ersten Betriebsmodus in der Modusliste gemäß der Verschiebungsrichtung, die dem zweiten Abtastpunkt entspricht, benachbart ist, auszuwählen,
eine Disparität zwischen dem ersten Betriebsmodus und dem zweiten Betriebsmodus zu überprüfen, und
(a) wenn der erste Betriebsmodus einer der Untermodi, die einer Multimedia-Modus-Klasse untergeordnet sind, ist und der zweite Betriebsmodus der normale Betriebsmodus ist, ein Steuersignal für einen Leistungskreis des Computers (300) zu erzeugen, um den Computer anzuweisen, neu zu starten, wodurch dem Computer ermöglicht wird, in dem zweiten Betriebsmodus zu arbeiten, und Ausführen einer Applikation, die für den zweiten Betriebsmodus spezifisch ist; oder
(b) wenn der erste Betriebsmodus einer der Untermodi, die einer Multimedia-Modus-Klasse untergeordnet sind, ist und der zweite Betriebsmodus der normale Betriebsmodus ist, ein Steuersignal für den Leistungskreis des Computers zu erzeugen, um den Computer anzuweisen, neu zu starten und in dem normalen Betriebsmodus zu arbeiten; oder
(c) wenn der erste Betriebsmodus und der zweite Betriebsmodus unterschiedliche Untermodi sind, die jeweils einer Multimedia-Modus-Klasse untergeordnet sind, ein Steuersignal an den Computer zu erzeugen, um den Computer anzuweisen, in dem zweiten Betriebsmodus zu arbeiten, und Ausführen der Untermodus-Applikation, die für den zweiten Betriebsmodus spezifisch ist.

2. System nach Anspruch 1, wobei das Steuermodul (230) weiterhin den Pointer (212) aktualisiert, um den zweiten Betriebsmodus gemäß der Verschiebungsrichtung auszuwählen.

3. System nach Anspruch 1, wobei das Detektionsmodul (220) weiterhin ein Detektieren der Kombination der elektrischen Potenziale innerhalb einer weiteren vorherbestimmten Zeitspanne nach dem ersten Abtastpunkt stoppt.

4. System nach Anspruch 1, welches weiterhin einen Anzeigeschirm umfasst, an den das Steuermodul (230) weiterhin ein Signal sendet, um Information des zweiten Betriebsmodus anzuzeigen.

5. System nach Anspruch 1, wobei der zusätzliche Mikroprozessor (200) weiterhin ein Watchdog-Überwachungsmodul (121) umfasst, um eine Ausführung einer Applikation, die von dem Computer ausgeführt wird, zu überwachen.

6. System nach Anspruch 5, wobei die Applikation eingerichtet ist, um ein LIVE-Signal an das Watchdog-Überwachungsmodul (121) zu senden, wenn ein erstes vorherbestimmtes Zeitintervall erreicht wird, und wobei das Watchdog-Überwachungsmodul bestimmt, dass die Ausführung der Applikation unnormal wird, falls das LIVE-Signal von der Applikation nicht innerhalb eines zweiten vorherbestimmten Zeitintervalls empfangen wird.

7. System nach Anspruch 5, wobei das Watchdog-Überwachungsmodul (121) eingerichtet ist, um ein CONFIRMATION-Signal an die Applikation zu senden, wenn ein erstes vorherbestimmtes Zeitintervall erreicht wird, und wobei die Applikation eingerichtet ist, um ein SURVIVING-Signal an das Überwachungsmodul als Antwort auf das CONFIRMATION-Signal zurückzugeben, wobei das Watchdog-Überwachungsmodul bestimmt, dass die Ausführung der Applikation unnormal wird, falls das SURVIVING-Signal von der Applikation nicht innerhalb eines zweiten vorherbestimmten Zeitintervalls empfangen wird.

8. Verfahren zum Steuern eines Computers (300), der mehrere Betriebsmodi unterstützt, umfassend die Schritte:
Bereitstellen einer Modus-Steuerung (100), um eine Kombination elektrischer Potenziale an einem ersten Anschluss (A) und einem zweiten Anschluss (B) zu erzeugen; und
Bereitstellen eines zusätzlichen Mikroprozessors (200),
der ein Speichermodul (210) umfasst,
**dadurch gekennzeichnet,**
**dass** das Speichermodul eine Modusliste (211), die eine Mehrzahl von Betriebsmodi speichert, und einen Pointer (212), der einen der Betriebsmodi in der Modusliste als einen ersten Betriebsmodus auswählt, umfasst;
**dass** der Computer (300) eingerichtet ist, um in einem normalen Betriebsmodus oder einem der Untermodi, die einer Multimedia-Modus-Klasse untergeordnet sind, zu arbeiten, und wobei der Computer, wenn er in einem der Untermodi betrieben wird, eingerichtet ist, um eine spezifische Untermodus-Applikation unter einer vereinfachten Version des Betriebssystems auszuführen;
Detektieren einer Kombination der elektrischen Potenziale an einem ersten Abtastpunkt;
Detektieren der Kombination der elektrischen Potenziale an einem zweiten Abtastpunkt;
Bestimmen von Verschiebungsrichtungen der Modussteuerung gemäß den Kombinationen der elektrischen Potenziale;
Ignorieren der Kombination der elektrischen Potenziale, die an dem zweiten Abtastpunkt detektiert werden, falls eine Verschiebungsrichtung, die dem ersten Abtastpunkt entspricht, nicht dieselbe ist wie eine Verschiebungsrichtung, die dem zweiten Abtastpunkt entspricht, und der zweite Abtastpunkt innerhalb einer vorherbestimmten Zeitspanne nach dem ersten Abtastpunkt liegt,
Auswählen eines zweiten Betriebsmodus, der zu dem ersten Betriebsmodus in der Modusliste gemäß der Verschiebungsrichtung, die dem zweiten Abtastpunkt entspricht, benachbart ist;
Überprüfen einer Disparität zwischen dem ersten Betriebsmodus und dem zweiten Betriebsmodus; und
(a) wenn der erste Betriebsmodus einer der Untermodi, die einer Multimedia-Modus-Klasse untergeordnet sind, ist und der zweite Betriebsmodus der normale Betriebsmodus ist, Erzeugen eines Steuersignals an einen Leistungskreis des Computers (300), um den Computer anzuweisen, neu zu starten, wodurch ermöglicht wird, dass der Computer im zweiten Betriebsmodus arbeitet, und Ausführen einer Applikation, die für den zweiten Betriebsmodus spezifisch ist; oder
(b) wenn der erste Betriebsmodus einer der Untermodi, die einer Multimedia-Modus-Klasse untergeordnet sind, ist und der zweite Betriebsmodus der normale Betriebsmodus ist, Erzeugen eines Steuersignals an den Leistungskreis des Computers, um den Computer anzuweisen, neu zu starten und in dem normalen Betriebsmodus zu arbeiten; oder
(c) wenn der erste Betriebsmodus und der zweite Betriebsmodus unterschiedliche Untermodi sind, die jeweils einer Multimedia-Modus-Klasse untergeordnet sind, Erzeugen eines Steuersignals an den Computer, um den Computer anzuweisen, in dem zweiten Betriebsmodus zu arbeiten, und Ausführen der Untermodus-Applikation, die für den zweiten Betriebsmodus spezifisch ist.

9. Verfahren nach Anspruch 8, welches weiterhin umfasst:
Aktualisieren des Pointers (212), um den zweiten Betriebsmodus gemäß der Verschiebungsrichtung auszuwählen.

10. Verfahren nach Anspruch 8, welches weiterhin umfasst:
Stoppen einer Detektion der Kombination der elektrischen Potenziale innerhalb einer ersten vorherbestimmten Zeitspanne nach dem ersten Abtastpunkt.

11. Verfahren nach Anspruch 8, welches weiterhin umfasst:
Senden eines Signals an einen Anzeigeschirm, um Information des zweiten Betriebsmodus anzuzeigen.

## Revendications

1. Système pour contrôler un ordinateur (300) supportant de multiples modes d'exploitation, comprenant :
un contrôleur de modes (100) pour générer une combinaison de potentiels électriques sur un premier terminal de connexion (A) et un second terminal de connexion (B) ; et
un microprocesseur supplémentaire (200), comprenant :
un module de stockage (210) ;
un module de détection (220) ; et
un module de commande (230),
**caractérisé en ce que** :
l'ordinateur (300) est configuré pour fonctionner dans un mode de fonctionnement normal ou un de sous-modes soumis à une catégorie de mode multimédia, et lorsqu'il fonctionne dans un desdits sous-modes, l'ordinateur est configuré pour exécuter une application de sous-mode spécifique sous une version simplifiée du système d'exploitation;
le module de stockage comprenant une liste de modes (211) enregistrant une pluralité de modes d'exploitation, et un pointeur (212) désignant un des modes d'exploitation dans la liste de modes comme un premier mode d'exploitation ;
le module de détection étant configuré pour :
détecter la combinaison des potentiels électriques au niveau d'un premier point d'échantillonnage ;
détecter la combinaison des potentiels électriques au niveau d'un second point d'échantillonnage ;
déterminer les directions de décalage du contrôleur de modes selon les combinaisons des potentiels électriques ;
ignorer la combinaison des potentiels électriques détectée au niveau du second point d'échantillonnage si une direction de décalage correspondant au premier point d'échantillonnage n'est pas identique à une direction de décalage correspondant au second point d'échantillonnage et si le second point d'échantillonnage se trouve dans une plage de temps prédéfinie après le premier point d'échantillonnage,
le module de commande étant configuré pour
sélectionner un second mode d'exploitation adjacent au premier mode d'exploitation dans la liste de modes selon la direction de décalage, correspondant au second point d'échantillonnage,
vérifier une disparité entre le premier mode d'exploitation et le second mode d'exploitation, et
(a) lorsque le premier mode d'exploitation est un des sous-modes soumis à une catégorie de mode multimédia et le second mode d'exploitation est le mode d'exploitation normal, générer un signal de commande à destination d'un circuit d'alimentation de l'ordinateur (300) pour faire redémarrer l'ordinateur, permettre à l'ordinateur de fonctionner dans le second mode d'exploitation, et exécuter une application spécifique au second mode d'exploitation ; ou,
(b) lorsque le premier mode d'exploitation est un des sous-modes soumis à une catégorie de modes multimédia et que le second mode d'exploitation est le mode d'exploitation normal, générer un signal de commande à destination du circuit d'alimentation de l'ordinateur pour faire redémarrer l'ordinateur et le faire fonctionner dans le mode d'exploitation normal ; ou,
(c) lorsque le premier mode d'exploitation et le second mode d'exploitation sont des sous-modes différents soumis à une catégorie de modes multimédia respectivement, générer un signal de commande à destination de l'ordinateur pour faire fonctionner l'ordinateur dans le second mode d'exploitation, et exécuter l'application de sous-mode spécifique au second mode d'exploitation.

2. Système selon la revendication 1, dans lequel le module de commande (230) actualise en outre le pointeur (212) pour sélectionner le second mode d'exploitation selon la direction de décalage.

3. Système selon la revendication 1, dans lequel le module de détection (220) arrête en outre de détecter la combinaison des potentiels électriques à l'intérieur d'une autre période prédéterminée après le premier point d'échantillonnage.

4. Système selon la revendication 1, comprenant en outre un écran d'affichage, auquel le module de commande (230) envoie en outre un signal pour afficher des informations du second mode d'exploitation.

5. Système selon la revendication 1, dans lequel le microprocesseur supplémentaire (200) comprend en outre un module de surveillance (121) pour surveiller une exécution d'une application étant exécutée par l'ordinateur.

6. Système selon la revendication 5, dans lequel l'application est configurée pour envoyer un signal LIVE au module de surveillance (121) lorsqu'un premier intervalle de temps prédéterminé est atteint, et le module de surveillance détermine que l'exécution de l'application devient anormale si le signal LIVE n'est pas reçu de l'application à l'intérieur d'un second intervalle de temps prédéterminé.

7. Système selon la revendication 5, dans lequel le module de surveillance (121) est configuré pour envoyer un signal CONFIRMATION à l'application lorsqu'un premier intervalle de temps prédéterminé est atteint et l'application est configurée pour renvoyer un signal SURVIVING au module de surveillance en réponse au signal CONFIRMATION, dans lequel le module de surveillance détermine que l'exécution de l'application devient anormale si le signal SURVIVING n'est pas reçu de l'application à l'intérieur d'un second intervalle de temps prédéterminé.

8. Procédé de contrôle d'un ordinateur (300) supportant de multiples modes d'exploitation, comprenant les étapes consistant à :
prévoir un contrôleur de modes (100) pour générer une combinaison de potentiels électriques sur un premier terminal de connexion (A) et un second terminal de connexion (B) ; et
prévoir un microprocesseur supplémentaire (200), comprenant un module de stockage (210) ;
**caractérisé en ce que** :
le module de stockage comprend une liste de modes (211) enregistrant une pluralité de modes d'exploitation, et un pointeur (212) désignant un des modes d'exploitation dans la liste de modes comme un premier mode d'exploitation ;
l'ordinateur (300) étant configuré pour fonctionner dans un mode d'exploitation normal ou un de sous-modes soumis à une catégorie de mode multimédia, et lorsqu'il fonctionne dans un desdits sous-modes, l'ordinateur est configuré pour exécuter une application de sous-mode spécifique sous une version simplifiée du système d'exploitation ;
détecter la combinaison des potentiels électriques au niveau d'un premier point d'échantillonnage ;
détecter la combinaison des potentiels électriques au niveau d'un second point d'échantillonnage ;
déterminer les directions de décalage du contrôleur de modes selon les combinaisons des potentiels électriques ;
ignorer la combinaison des potentiels électriques détectée au niveau du second point d'échantillonnage si une direction de décalage correspondant au premier point d'échantillonnage n'est pas identique à une direction de décalage correspondant au second point d'échantillonnage et si le second point d'échantillonnage se trouve dans une plage de temps prédéfinie après le premier point d'échantillonnage,
sélectionner un second mode d'exploitation adjacent au premier mode d'exploitation dans la liste de modes selon la direction de décalage, correspondant au second point d'échantillonnage,
vérifier une disparité entre le premier mode d'exploitation et le second mode d'exploitation, et
(a) lorsque le premier mode d'exploitation est un des sous-modes soumis à une catégorie de modes multimédia et le second mode d'exploitation est le mode d'exploitation normal, générer un signal de commande à destination d'un circuit d'alimentation de l'ordinateur (300) pour faire redémarrer l'ordinateur, permettre à l'ordinateur de fonctionner dans le second mode d'exploitation, et exécuter une application spécifique au second mode d'exploitation ; ou,
(b) lorsque le premier mode d'exploitation est un des sous-modes soumis à une catégorie de modes multimédia et que le second mode d'exploitation est le mode d'exploitation normal, générer un signal de commande à destination du circuit d'alimentation de l'ordinateur pour faire redémarrer l'ordinateur et le faire fonctionner dans le mode d'exploitation normal ; ou,
(c) lorsque le premier mode d'exploitation et le second mode d'exploitation sont des sous-modes différents soumis à une catégorie de modes multimédia respectivement, générer un signal de commande à destination de l'ordinateur faire fonctionner l'ordinateur dans le second mode d'exploitation, et exécuter l'application de sous-mode spécifique au second mode d'exploitation.

9. Procédé selon la revendication 8, consistant en outre à actualiser le pointeur (212) pour sélectionner le second mode d'exploitation selon la direction de décalage.

10. Procédé selon la revendication 8, consistant en outre à arrêter de détecter la combinaison des potentiels électriques à l'intérieur d'une première période prédéterminée après le premier point d'échantillonnage.

11. Procédé selon la revendication 8, consistant en outre à envoyer un signal à un écran d'affichage pour afficher des informations du second mode d'exploitation.
